# EUROPEAN PATENT APPLICATION

(11) **EP 4 376 181 A1**
(43) Date of publication of application: **29.05.2024**
(21) Application number: 23202941.3
(22) Date of filing: 11.10.2023
(51) Int. Cl.: H01M 50/202, H01M 50/222, H01M 50/224, H01M 50/24, H01M 50/251, C04B 28/04

(54) **CABINET FOR RECEIVING ENERGY STORAGE APPARATUS**

(30) Priority: 24.11.2022 TW 111145031
(71) Applicant: TCC Energy Storage Technology Corporation, Taipei City 104414 (TW)
(72) Inventor: CHANG, An-Ping, 104414 TAIPEI CITY (TW)
(74) Representative: 2K Patentanwälte Blasberg Kewitz & Reichel

(57) **Abstract**

A cabinet (1) for receiving an energy storage apparatus includes a substantially cube-shaped frame (11, 12, 13) and a plurality of sheet-shaped concrete structures (14-18) attached to the frame. The sheet-shaped concrete structure (14-18) includes an ultra-high performance concrete (UHPC).

## Description

### 1. Field of the Invention

The present disclosure essentially relates to a cabinet for receiving an energy storage apparatus. More specifically, the present disclosure relates to a cabinet including a concrete structure and receiving a battery system.

### 2. Description of the Related Art

In order to improve efficiency and flexibility of use of energy, the development of energy storage apparatuses has become a trend in recent years. With the development and maturation of battery technology (such as lithium battery), a battery energy storage apparatus has become one of the mainstream energy storage apparatuses. At present, metal containers commonly used in international shipping are used as energy storage cabinets for the energy storage apparatuses due to the considerations of convenient loading and transportation and weatherability.

However, during the storage or transportation of a battery, various factors (such as overcharge, impact, electronic control system errors, operating environment, or process defects) may lead to the breakage of a spacer film in the battery, which makes a positive electrode contact with a negative electrode and forms a short circuit, resulting in a high thermal chemical reaction and ignition of combustible organic components in the battery. High temperature caused by thermal runaway of the battery may further lead to the damage of adjacent apparatuses of the battery energy storage apparatus and the occurrence of fire accidents.

### SUMMARY OF THE INVENTION

In some embodiments, the present disclosure provides a cabinet for receiving a battery system, including a plurality of first edge bars substantially extending in a direction, a plurality of second edge bars substantially extending vertically with respect to the first edge bars, and a plurality of third edge bars substantially extending vertically with respect to the first edge bars. The first edge bars, the second edge bars, and the third edge bars co-form a substantially cube-shaped frame. The cabinet further includes a plurality of concrete side plates, a concrete bottom plate, and a concrete top plate. Each of the concrete side plates is surrounded by the first edge bar, the second edge bar, and the third edge bar. The concrete bottom plate is surrounded by the second edge bars. The concrete top plate is surrounded by the third edge bar. The concrete side plates, the concrete bottom plate, and the concrete top plate surround a space configured to receive the battery system.

In some embodiments, the present disclosure provides a storage cabinet, including a plurality of concrete plates, a plurality of edge bars configured to be connected together, and a accommodating space co-formed by the concrete plates. Each of the edge bars extends between two adjacent concrete plates, and the accommodating space is configured to receive a battery system.

In some embodiments, the present disclosure provides a storage cabinet, including a substantially cube-shaped frame and a plurality of sheet-shaped concrete structures attached to the frame. The sheet-shaped concrete structure includes ultra-high performance concrete (UHPC).

The technical features of the present disclosure have been summarized broadly above to enable better understanding of the following detailed description of the present disclosure. Other technical features that constitute the subject matter of the patent application scope of the present disclosure will be described below. Those of ordinary skill in the art to which the present disclosure pertains will appreciate that the concepts and specific embodiments disclosed below may be used easily to modify or design other structures or processes to achieve the same purposes as the present disclosure. Those of ordinary skill in the art to which the present disclosure pertains will also appreciate that such equivalent constructions cannot depart from the spirit and scope of the present disclosure as defined in the appended application patent scope.

### BRIEF DESCRIPTION OF THE DRAWINGS

The patterns of the present disclosure will be better understood from the following implementations together with the accompanying drawings. It should be noted that various features are not drawn to actual scale according to the standard practice of the industry. In fact, for clarity, the dimensions of various feature members may be enlarged or reduced at will.
FIG. 1A is a schematic exploded view of a cabinet for receiving an energy storage apparatus according to an embodiment of the present disclosure.
FIG. 1B is a schematic perspective view of a cabinet for receiving an energy storage apparatus according to an embodiment of the present disclosure.
FIG. 1C is a schematic view of a use state of a cabinet for receiving an energy storage apparatus according to an embodiment of the present disclosure.
FIG. 2A is a schematic perspective view of a edge bar of a frame of a cabinet according to an embodiment of the present disclosure.
FIG. 2B is a schematic cross-sectional view of a edge bar of a frame of a cabinet according to an embodiment of the present disclosure.
FIG. 3 is a schematic perspective view of a concrete plate of a cabinet according to an embodiment of the present disclosure.
FIG. 4 is a schematic perspective view of a concrete plate of a cabinet according to an embodiment of the present disclosure.
FIG. 5 is a schematic perspective view of a concrete plate of a cabinet according to an embodiment of the present disclosure.
FIG. 6 is a front view of a door of a cabinet according to an embodiment of the present disclosure.
FIG. 7A is a schematic side view of a cabinet for receiving an energy storage apparatus according to an embodiment of the present disclosure.
FIG. 7B is a schematic view of cross-section I-I of FIG. 7A.
FIG. 7C is a schematic enlarged view of part A of FIG. 7B.
FIG. 8A is a schematic top view of a cabinet for receiving an energy storage apparatus according to an embodiment of the present disclosure.
FIG. 8B is a schematic view of cross-section II-II of FIG. 8A.
FIG. 8C is a schematic enlarged view of part B of FIG. 8B.
FIG. 8D is a schematic enlarged view of part C of FIG. 8B.
FIG. 8E is a schematic enlarged view of part D of FIG. 8B.
FIG. 9A is a schematic exploded view of a cabinet for receiving an energy storage apparatus according to another embodiment of the present disclosure.
FIG. 9B is a schematic perspective view of a cabinet for receiving an energy storage apparatus according to another embodiment of the present disclosure.
FIG. 10A is a schematic perspective view of a concrete plate of a cabinet according to an embodiment of the present disclosure.
FIG. 10B is a schematic partially enlarged view of a concrete plate of a cabinet according to an embodiment of the present disclosure.
FIG. 11A is a schematic perspective view of a concrete plate of a cabinet according to an embodiment of the present disclosure.
FIG. 11B is a schematic partially enlarged view of a concrete plate of a cabinet according to an embodiment of the present disclosure.

### PREFERRED EMBODIMENT OF THE PRESENT INVENTION

The following disclosure provides many different embodiments or examples for implementing different features of the subject matter provided. Specific examples of elements and configurations will be described below to simplify the present disclosure. Definitely, these are examples only and are not intended to be limiting. For example, in the following description, "forming a first member above or on a second member" may include embodiments in which the first member and the second member are in direct contact, and may also include embodiments in which additional members may be formed between the first member and the second member so that the first member and the second member may not be in direct contact. In addition, the present disclosure may repeat element symbols and/or letters in various examples. This repetition is intended to be simple and clear and does not indicate a relationship between various embodiments and/or configurations discussed.

Furthermore, for ease of description, spatial relative terms (such as "beneath", "below", "under", "above", "on", "over", and similar terms) may be used herein to describe a relationship of one element or member to another (some) elements or members, as illustrated in the figures. In addition to the orientations depicted in the figures, the spatial relative terms are also intended to encompass different orientations of an apparatus in use or operation. The apparatus may be oriented in other ways (rotating by 90 degrees or otherwise), and spatial relative descriptors used herein may also be interpreted accordingly.

As used herein, terms such as "first," "second," and "third" describe various elements, components, regions, layers, and/or sections, and such elements, components, regions, layers, and/or sections should not be limited by such terms. These terms may be used only to distinguish elements, components, regions, layers, or sections from each other. The terms such as "first," "second," and "third," as used herein, do not imply a sequence or order unless clearly indicated in the context.

As used herein, terms "substantially", "essentially", "essence", and "about" are used for describing and explaining minor variations. When used in conjunction with an event or condition, the terms may refer to instances in which the event or condition occurs precisely and instances in which the event or condition occurs very approximately. For example, when used in conjunction with a value, the terms may refer to a range of variations less than or equal to ±10% of the value, such as less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%. For example, if a difference between two values is less than or equal to ±10% of an average of the values (such as less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%), the values may be considered to be "essentially" the same or equal. For example, "essentially" parallel may refer to a range of angular variations less than or equal to ±10° relative to 0°, such as less than or equal to ±5°, less than or equal to ±4°, less than or equal to ±3°, less than or equal to ±2°, less than or equal to ±1°, less than or equal to ±0.5°, less than or equal to ±0.1°, or less than or equal to 0.05°. For example, "essentially" vertical may refer to a range of angular variations less than or equal to ±10° relative to 90°, such as less than or equal to ±5°, less than or equal to ±4°, less than or equal to ±3°, less than or equal to ±2°, less than or equal to ±1°, less than or equal to ±0.5°, less than or equal to ±0.1°, or less than or equal to 0.05°.

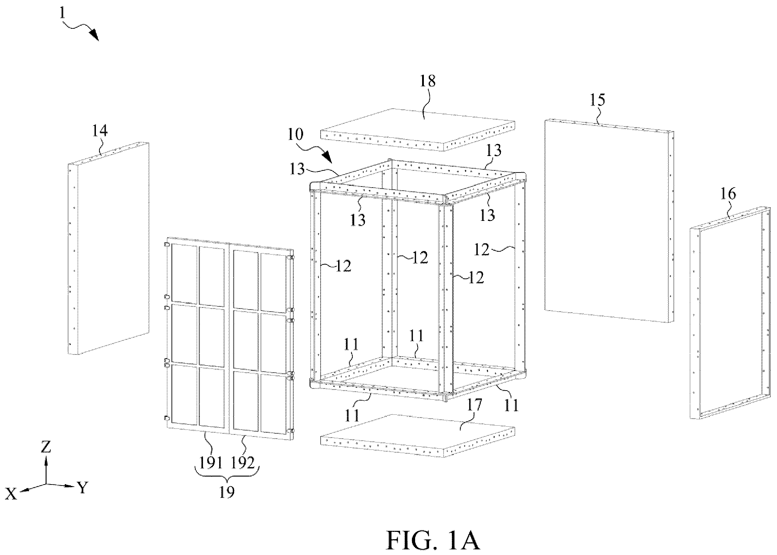

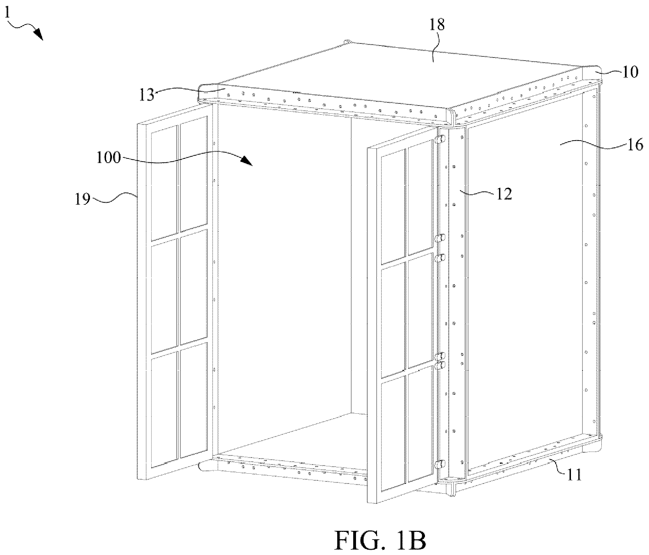

FIG. 1A is a schematic exploded view of a cabinet for receiving an energy storage apparatus according to an embodiment of the present disclosure. FIG. 1B is a schematic perspective view of a cabinet for accommodating an energy storage apparatus according to an embodiment of the present disclosure. As shown in FIG. 1A and FIG. 1B, a cabinet 1 may include a frame 10, a plurality of concrete plates 14, 15, 16, 17, and 18 including concrete materials, and a door 19. In some embodiments of the present disclosure, the cabinet 1 may be a storage cabinet for storing one or more energy storage apparatuses such as battery systems.

Referring to FIG. 1A, the frame 10 may include a plurality of edge bars 11 and 13 substantially extending parallel to an X-Y plane and a plurality of edge bars 12 substantially extending in a Z direction. The plurality of edge bars 11 are connected to each other to form a roughly rectangular frame. The plurality of edge bars 13 are connected to each other to form a substantially rectangular frame. The rectangular frame formed by connecting the edge bars 11 and the rectangular frame formed by connecting the edge bars 13 are spaced by a distance. Two ends of each of the edge bars 12 are respectively connected to the rectangular frame formed by the connection of the edge bars 11 and the rectangular frame formed by the connection of the edge bars 13. In this way, the edge bars 11, 12, and 13 co-form the frame 10. In some embodiments of the present disclosure, the frame 10 is a cube-shaped frame.

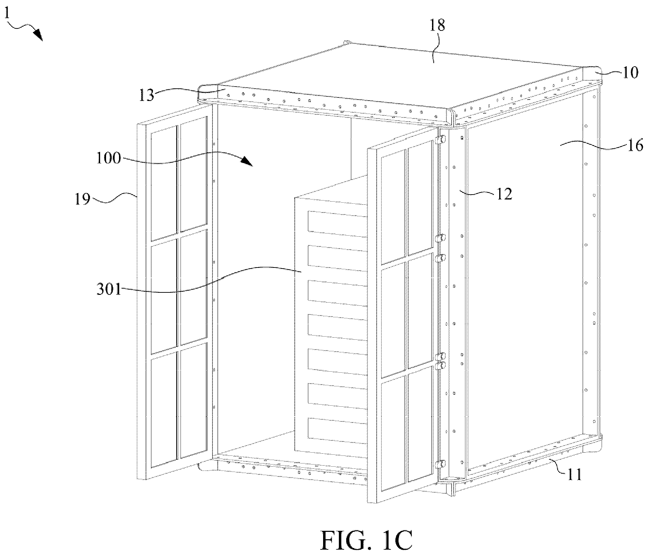

The concrete plates 14, 15, 16, 17, and 18 are arranged in the frame 10. In some embodiments of the present disclosure, the concrete plates 14, 15, 16, 17, and 18 include substantially sheet-shaped concrete structures. In some embodiments of the present disclosure, the concrete plates 14, 15, 16, 17, and 18 each have a thickness less than or equal to about 5 cm. In some embodiments of the present disclosure, the concrete plates 14, 15, 16, 17, and 18 each have a thickness less than or equal to about 2.5 cm. As shown in FIG. 1A and FIG. 1B, the concrete plate 14 is substantially parallel to an X-Z plane and connected to the edge bars 11, 12, and 13 of the frame 10 and thereby to form a side wall of the cabinet 10. In some embodiments, the concrete plate 14 is substantially surrounded by the edge bars 11, 12, and 13. The concrete plate 15 is substantially parallel to a Y-Z plane and connected to the edge bars 11, 12, and 13 of the frame 10 and thereby form a side wall of the cabinet 10. In some embodiments, the concrete plate 15 is substantially surrounded by the edge bars 11, 12, and 13. The concrete plate 16 is substantially parallel to the X-Z plane and connected to the edge bars 11, 12, and 13 of the frame 10 and thereby form a side wall of the cabinet 10. In some embodiments, the concrete plate 16 is substantially surrounded by the edge bars 11, 12, and 13. The concrete plate 17 is substantially parallel to the X-Y plane and connected to the edge bar 11 of the frame 10 and thereby form a bottom plate of the cabinet 10. In some embodiments, the concrete plate 17 is substantially surrounded by the edge bar 11. The concrete plate 18 is substantially parallel to the X-Y plane and connected to the edge bar 13 of the frame 10 and therebyo form a top plate of the cabinet 10. In some embodiments, the concrete plate 18 is substantially surrounded by the edge bar 13. Therefore, the edge bar 11 passes between the concrete plate 17 parallel to the X-Y plane and the concrete plate 15 or 16 parallel to the Y-Z plane or the concrete plate 14 parallel to the X-Z plane. The edge bar 13 passes between the concrete plate 18 parallel to the X-Y plane and the concrete plate 15 or 16 parallel to the Y-Z plane or the concrete plate 14 parallel to the X-Z plane. The edge bar 12 passes between the concrete plate 14 parallel to the X-Z plane and the concrete plate 15 or 16 parallel to the Y-Z plane. Referring to FIG. 1C, the concrete plates 14, 15, 16, 17, and 18 are arranged on the frame 10 to co-form a accommodating space 100 of the cabinet 1. The accommodating space 100 of the cabinet 1 is configured to accommodate an energy storage apparatus 301, such as a battery system.

In some embodiments, the concrete plates 14, 15, 16, 17, and 18 may include synthetic fibers. In some embodiments, the length of the synthetic fiber is about 4 mm to about 20 mm, and the diameter of the synthetic fiber is about 0.2 mm. In some embodiments, the content of the synthetic fibers in the concrete plates 14, 15, 16, 17, and 18 is about 30 kg/m³ to about 60 kg/m³. The synthetic fibers may enhance the bending strength of the concrete plates 14, 15, 16, 17, and 18. In some embodiments, the concrete plates 14, 15, 16, 17, and 18 include ultra-high performance concrete (UHPC).

According to some embodiments of the present disclosure, since the concrete plates 14, 15, 16, 17, and 18 include the aforementioned synthetic fibers and/or are formed from the ultra-high performance concrete, the concrete plates 14, 15, 16, 17, and 18 may have a bending resistance similar to that of an ordinary reinforced concrete without needing to arrange a rebar structure (such as a rebar cage and/or a rebar assembly composed of a plurality of stirrups) in the concrete plates 14, 15, 16, 17, and 18. Besides, since there is no need to arrange the rebar structure in the concrete plates 14, 15, 16, 17, and 18 for improving the bending strength, the concrete plates 14, 15, 16, 17, and 18 may have a smaller wall thickness. Therefore, the overall weight of the cabinet 1 can be reduced and the transportation and movement of the cabinet 1 is facilitated.

In some embodiments, the concrete plates 14, 15, 16, 17, and 18 may further include one or more type of cement having different compositions, numerous different granules, oxides, and numerous different additives. In some embodiments, the concrete plates 14, 15, 16, 17, and 18 may include Portland cement, silica fume (having a size characterized as powder), silica sand (having a size or particle size less than about 2 cm), quartz powder (having a size or particle size of about 20 mm to about 30 mm), slag powder (having a specific surface area of 450-550 m²/kg), water reducer, defoamer, sweller, or any random combination thereof.

In some embodiments, the concrete plates 14, 15, 16, 17, and 18 may include one or more of Portland Type I cement, Portland Type II cement, Portland Type III cement, Portland Type IV cement, and Portland Type V cement in a content of about 800 kg/m³ to about 900 kg/m³. In some embodiments, the concrete plates 14, 15, 16, 17, and 18 may include one of Portland Type I cement, Portland Type II cement, Portland Type III cement, Portland Type IV cement, and Portland Type V cement in a content of about 400 kg/m³ to about 500 kg/m³ and another of Portland Type I cement, Portland Type II cement, Portland Type III cement, Portland Type IV cement, and Portland Type V cement in a content of about 400 kg/m³ to about 500 kg/m³. In some embodiments, the concrete plates 14, 15, 16, 17, and 18 may include silica fume in a content of about 120 kg/m³ to about 250 kg/m³. In some embodiments, the concrete plates 14, 15, 16, 17, and 18 may include silica sand in a content of about 900 kg/m³ to about 1000 kg/m³. In some embodiments, the concrete plates 14, 15, 16, 17, and 18 may include quartz powder or slag powder in a content of about 50 kg/m³ to about 300 kg/m³. In some embodiments, due to the above combination of silica fume and quartz powder, the concrete plates 14, 15, 16, 17, and 18 have a higher compressive strength than the ordinary concrete. In some embodiments, the oxides may be added to adjust the exterior color of the concrete plates 14, 15, 16, 17, and 18.

In some embodiments, the concrete plates 14, 15, 16, 17, and 18 may include water reducer in a content of about 10 kg/m³ to about 20 kg/m³. In some embodiments, the concrete plates 14, 15, 16, 17, and 18 may include defoamer in a content equal to or less than 10 kg/m³ and sweller in a content equal to or less than 25 kg/m³.

In some embodiments, the unit structural weight of the concrete plates 14, 15, 16, 17, and 18 is equal to or greater than about 2300 kg/m³. In some embodiments, the unit structural weight of the concrete plates 14, 15, 16, 17, and 18 is about 2300 kg/m³ to 2700 kg/m³. In some embodiments, the compressive strength of the concrete plates 14, 15, 16, 17, and 18 is equal to or greater than about 120 MPa. In some embodiments, the compressive strength of the concrete plates 14, 15, 16, 17, and 18 is about 120 MPa to about 180 MPa. In some embodiments, the ultimate bending strength of the concrete plates 14, 15, 16, 17, and 18 is greater than about 15 MPa. In this way, there is no need to arrange the reinforcement assembly in the concrete plates 14, 15, 16, 17, and 18, so that the concrete plates 14, 15, 16, 17, and 18 may have a smaller wall thickness, thereby reducing the overall weight of the cabinet 1. Moreover, the concrete plates 14, 15, 16, 17, and 18 may provide high compressive strength and high bending strength for the cabinet 1 and may thus be applied in more extreme environments (such as environments that withstand high temperature flames) while still maintaining the integrity of the overall structure.

In some embodiments, the thermal conductivity of the concrete plates 14, 15, 16, 17, and 18 is equal to or less than about 1.8 W/m·K. In some embodiments, the thermal conductivity of the concrete plates 14, 15, 16, 17, and 18 is about 1.6 W/m·K to about 1.8 W/m·K. The concrete plates 14, 15, 16, 17, and 18 of the present disclosure have a better thermal insulation effect compared to metallic materials or ordinary concrete (having a thermal conductivity of about 1.9 W/m·K to about 2.1 W/m·K, which is beneficial to reduce thermal conduction between the inside of the accommodating space 100 and the outside of the concrete plates 14, 15, 16, 17, and 18. When the apparatus or element in the accommodating space 100 needs to stay at a particular high or low temperature, the good thermal insulation effect of the concrete plates 14, 15, 16, 17, and 18 is beneficial to reduce energy required by an air-conditioning apparatus, which can thereby reduce the cost, and additionally achieve effects of environmental protection, energy saving, and carbon reduction.

The door 19 may be pivotally attached to the frame 10. In some embodiments of the present disclosure, the door 19 is arranged on and/or pivotally attached to the edge bar 12. In some embodiments of the present disclosure, the door 19 includes two door panels 191 and 192. In some embodiments of the present disclosure, the door 19 has the same or similar material included in the concrete plates 14, 15, 16, 17, and 18.

As shown in FIG. 1C, an energy storage apparatus 301, such as a battery system, may be received in the accommodating space 100 of the cabinet 1. In some embodiments of the present disclosure, the energy storage apparatus 301 received in the accommodating space 100 may be fixed to the concrete plate 17.

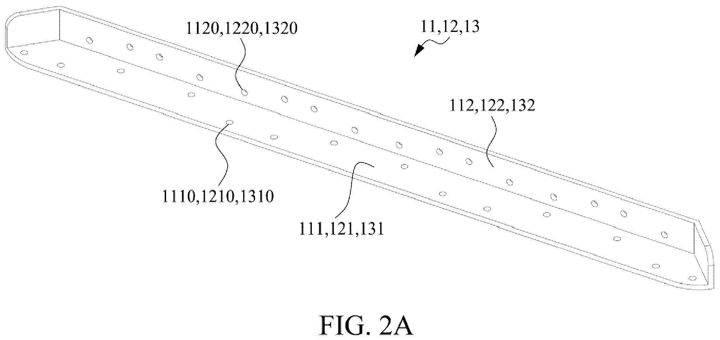

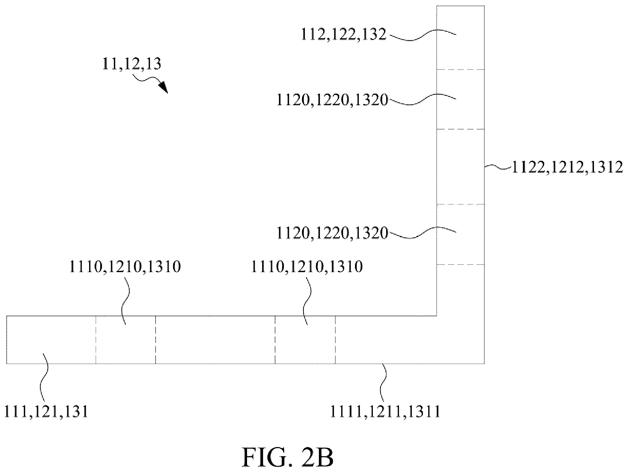

FIG. 2A is a schematic perspective view of edge bars 11, 12, and 13 of a frame 10 according to an embodiment of the present disclosure. FIG. 2B is a schematic cross-sectional view of edge bars 11, 12, and 13 of a frame 10 according to an embodiment of the present disclosure. The edge bars 11, 12, and 13 have a substantially L-shaped cross-sectional structure. In some embodiments of the present disclosure, the edge bars 11, 12, and 13 are made of a bent metal sheet. In some embodiments of the present disclosure, the edge bars 11, 12, and 13 have an L-shaped steel. As shown in FIG. 2A and FIG. 2B, the edge bars 11, 12, and 13 have first sheet portions 111, 121, and 131 and second sheet portions 112, 122, and 132. The first sheet portions 111, 121, and 131 and the second sheet portions 112, 122, and 132 are connected to each other and intersect each other substantially vertically. The first sheet portions 111, 121, and 131 and the second sheet portions 112, 122, and 132 have the same material and are substantially integrated. Surfaces 1111, 1211, and 1311 of the first sheet portions 111, 121, and 131 and surfaces 1112, 1212, and 1312 of the second sheet portions 112, 122, and 132 of the edge bars 11, 12, and 13 may be connected and/or attached to the concrete plates 14, 15, 16, 17, and 18. In some embodiments of the present disclosure, the first sheet portions 111, 121, and 131 of the edge bars 11, 12, and 13 have a plurality of through holes 1110, 1210, and 1310 allowing passage of bolts, and the second sheet portions thereof have a plurality of through holes 1120, 1220, and 1320 allowing passage of bolts.

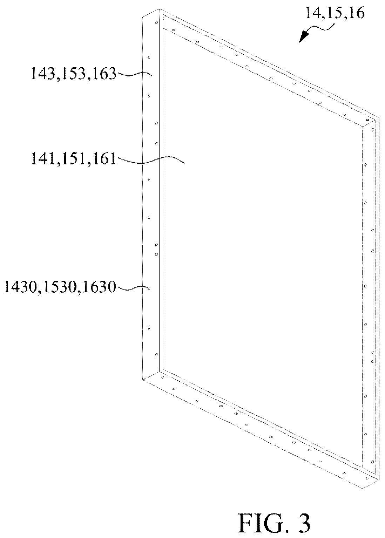

FIG. 3 is a schematic perspective view of concrete plates 14, 15, and 16 according to an embodiment of the present disclosure. As shown in FIG. 3, the concrete plates 14, 15, and 16 have plate portions 141, 151, and 161 and flanges 143, 153, and 163. The flanges 143, 153, and 163 are formed on the surfaces 140, 150, and 160 of the concrete plates 14, 15, and 16 facing away from the accommodating space 100. That is, the flanges 143, 153, and 163 are formed on outer surfaces of the concrete plates 14, 15, and 16 and extend and protrude outward. Referring to FIG. 3, the flanges 143, 153, and 163 extend substantially at the periphery of the concrete plates 14, 15, and 16 and surround the plate portions 141, 151, and 161 of the concrete plates 14, 15, and 16, and the flanges 143, 153, and 163 have through holes 1430, 1530, and 1630 allowing passage of bolts. Thus, when the concrete plates 14, 15, and 16 are arranged on the frame 10, the flanges 143, 153, and 163 substantially abut against the edge bars 11, 12, and 13 of the frame 10, and the through holes 1430, 1530, and 1630 of the flanges 143, 153, and 163 may be substantially aligned with the through holes 1110, 1210, 1310, 1120, 1220, and 1320 of the edge bars 11, 12, and 13.

In some embodiments of the present disclosure, the plate portions 141, 151, and 161 and the flanges 143, 153, and 163 of the concrete plates 14, 15, and 16 are formed in the same process. The plate portions 141, 151, and 161 and the flanges 143, 153, and 163 of the concrete plates 14, 15, and 16 are formed simultaneously when concrete slurry is poured into a mold to form the concrete plates 14, 15, and 16. Therefore, the plate portions 141, 151, and 161 and the flanges 143, 153, and 163 of the concrete plates 14, 15, and 16 are integrally formed. In some embodiments of the present disclosure, the through holes 1430, 1530, and 1630 of the flanges 143, 153, and 163 are formed when the concrete slurry is poured into the mold to form the concrete plates 14, 15, and 16. In some embodiments of the present disclosure, the thickness of the flanges 143, 153, and 163 of the concrete plates 14, 15, and 16 is greater than the thickness of the plate portions 141, 151, and 161.

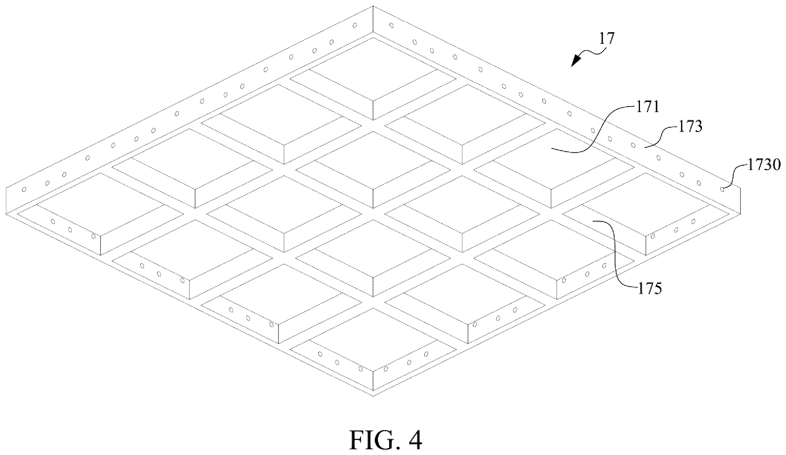

FIG. 4 is a schematic perspective view of a concrete plate 17 according to an embodiment of the present disclosure. As shown in FIG. 4, the concrete plate 17 has a plate portion 171, a flange 173, and a plurality of ribs 175 extending in a mutually interlaced manner. The flange 173 and the rib 175 are formed on a surface 170 of the concrete plate 17 facing away from the accommodating space 100. That is, the flange 173 and the rib 175 are formed on a bottom (outer) surface of the concrete plate 17 and extend downward (outward). Referring to FIG. 4, the flange 173 extends substantially at the periphery of the concrete plate 17 and surround the plate portion 171 of the concrete plate 17, and the flange 173 has a through hole 1730 allowing passage of a bolt. Thus, when the concrete plate 17 is arranged on the frame 10, the flange 173 substantially abuts against the edge bar 11 of the frame 10, and the through hole 1730 of the flange 173 may be substantially aligned with the through hole 1110 or 1120 of the edge bar 11.

Referring again to FIG. 4, a plurality of ribs 175 extend on the concrete plate 17 in a interlaced manner. In some embodiments of the present disclosure, two ribs 175 extending in different directions may be interlaced substantially vertically to each other. In some embodiments of the present disclosure, the rib 175 is connected to the flange 173. In some embodiments of the present disclosure, the thickness of the plate portion 171 of the concrete plate 17 is smaller (for example, about 2.5 cm), and the thickness of the rib 175 is greater than the thickness of the plate portion. In this way, when a battery system is accommodated in the accommodating space 100 of the cabinet 1 and placed on an upper surface of the concrete plate 17, a plurality of interlaced ribs 175 enhance the bending strength of the concrete plate 17 against the downward pressure of the concrete plate 17 by the weight of the battery system. In some embodiments of the present disclosure, the thickness of the flange 173 of the concrete plate 17 is greater than the thickness of the plate portion 171.

In some embodiments of the present disclosure, the plate portion 171, the flange 173, and the rib 175 of the concrete plate 17 are formed in the same process. The plate portion 171, the flange 173, and the rib 175 of the concrete plate 17 are formed simultaneously when concrete slurry is poured into a mold to form the concrete plate 17. Therefore, the plate portion 171, the flange 173, and the rib 175 of the concrete plate 17 are integrally formed. In some embodiments of the present disclosure, the through hole 1730 of the flange 173 is formed when the concrete slurry is poured into the mold to form the concrete plate 17.

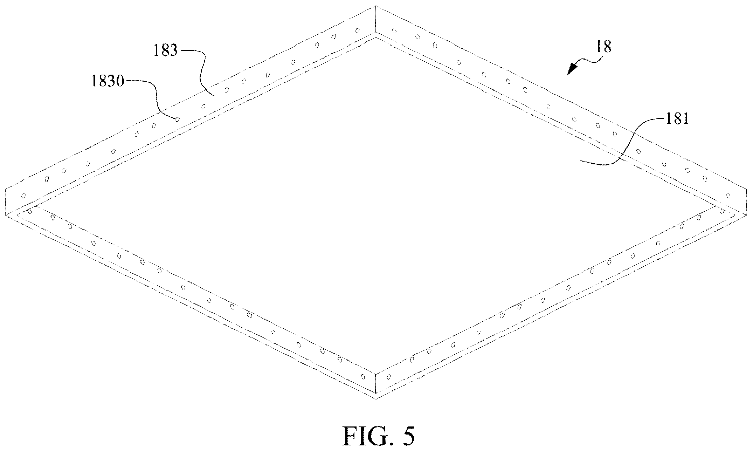

FIG. 5 is a schematic perspective view of a concrete plate 18 according to an embodiment of the present disclosure. As shown in FIG. 5, the concrete plate 18 has a plate portion 181 and a flange 183. The flange 183 is formed on a surface 180 of the concrete plate 17 facing the accommodating space 100. That is, the flange 183 is formed on a bottom (inner) surface of the concrete plate 18 and extend downward (inward). Referring to FIG. 5, the flange 183 extends substantially at the periphery of the concrete plate 18 and surround the plate portion 181 of the concrete plate 18, and the flange 183 has a through hole 1830 allowing passage of a bolt. Thus, when the concrete plate 18 is arranged on the frame 10, the flange 183 substantially abuts closely against the edge bar 12 of the frame 10, and the through hole 1830 of the flange 183 may be substantially aligned with the through hole 1210 or 1220 of the edge bar 12.

In some embodiments of the present disclosure, the plate portion 181 and the flange 183 of the concrete plate 18 are formed in the same process. The plate portion 171 and the flange 183 of the concrete plate 18 are formed simultaneously when concrete slurry is poured into a mold to form the concrete plate 18. Therefore, the plate portion 181 and the flange 183 of the concrete plate 18 are integrally formed. In some embodiments of the present disclosure, the through hole 1830 of the flange 183 is formed when the concrete slurry is poured into the mold to form the concrete plate 18. In some embodiments of the present disclosure, the thickness of the flange 183 of the concrete plate 18 is greater than the thickness of the plate portion 181.

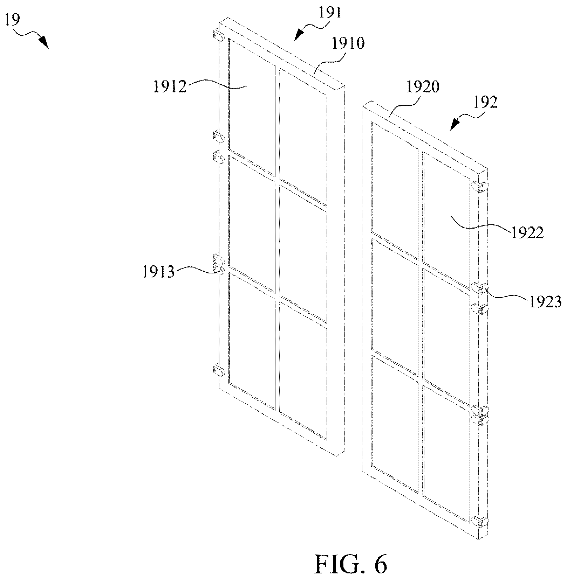

FIG. 6 is a front view of a door 19 according to an embodiment of the present disclosure. In some embodiments of the present disclosure, the door 19 has two door panels 191 and 192. The door panels 191 and 192 have door frames 1910 and 1920, concrete structures 1912 and 1922, and pivot members 1913 and 1923. In some embodiments of the present disclosure, the door frames 1910 and 1920 are made of metallic materials. In some embodiments of the present disclosure, the concrete structures 1912 and 1922 are arranged in the door frames 1910 and 1920. The concrete structures 1912 and 1922 include the same or similar materials that make or form the concrete plates 14, 15, 16, 17, and 18. For example, the concrete structures 1912 and 1922 include ultra-high performance concrete (UHPC). The pivot members 1913 and 1923 are configured to connect the door panels 191 and 192 to the edge bar 12 of the frame 10. Thus, the cabinet 1 has a bifold door 19.

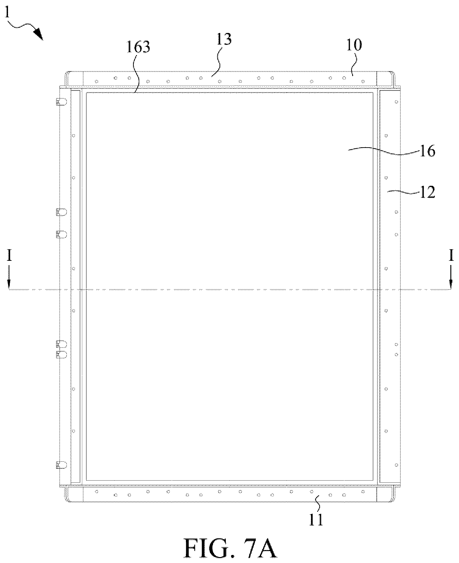

FIG. 7A is a schematic side view of a cabinet 1 for receiving an energy storage apparatus according to an embodiment of the present disclosure. As shown in FIG. 7A, the concrete plate 16 is arranged on the frame 10, which is substantially surrounded by the edge bars 11, 12, and 13 of the frame 10, and the flange 163 of the concrete plate 16 substantially abuts closely against the edge bars 11, 12, and 13 of the frame 10.

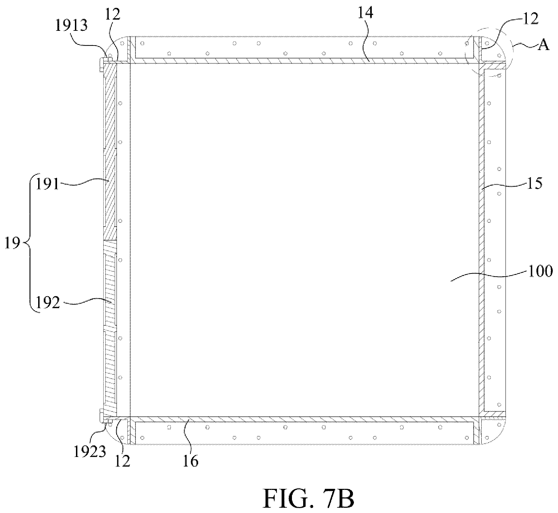

FIG. 7B is a schematic view of cross-section I-I of FIG. 7A. As shown in FIG. 7B, the flanges 143, 153, and 163 on both sides of the concrete plates 14, 15, and 16 abut closely against the edge bar 12 of the frame 10. The door panels 191 and 192 of the door 19 are connected to the edge bar 12 via the pivot members 1913 and 1923. The accommodating space 100 of the cabinet 1 is substantially surrounded by the concrete plates 14, 15, and 16 and the door 19.

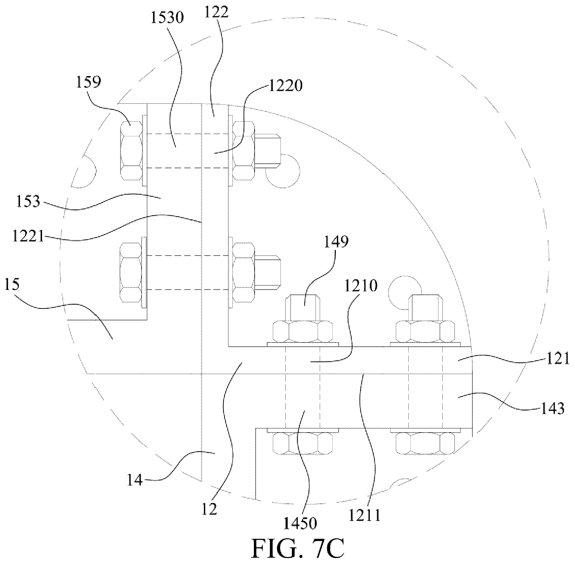

FIG. 7C is a schematic enlarged view of part A in FIG. 7B. Referring to FIG. 7C, the flange 143 of the concrete plate 14 and the flange 153 of the concrete plate 15 abut closely against the edge bar 12. As shown in FIG. 7C, the flange 143 of the concrete plate 14 abuts against a surface 1211 of the first sheet portion 121 of the edge bar 12, and the through hole 1430 of the flange 143 is substantially aligned with the through hole 1210 of the first sheet portion 121, while a bolt 149 passes through the through hole 1430 of the flange 143 and the through hole 1210 of the first sheet portion 121 to fasten the flange 143 of the concrete plate 14 together with the first sheet portion 121 of the edge bar 12, thus fixing the concrete plate 14 to the edge bar 12. In addition to the bolt 149, other fasteners may be used for fastening the flange 143 of the concrete plate 14 and the first sheet portion 121 of the edge bar 12 by the through hole 1430 of the flange 143 and the through hole 1210 of the first sheet portion 121 or in other manners, so that the concrete plate 14 is fixed to the edge bar 12.

Also, the flange 153 of the concrete plate 15 abuts closely against a surface 1221 of the second sheet portion 122 of the edge bar 12, and the through hole 1530 of the flange 153 is substantially aligned with the through hole 1220 of the second sheet portion 122, while a bolt 159 passes through the through hole 1530 of the flange 153 and the through hole 1220 of the second sheet portion 122 to fasten the flange 153 of the concrete plate 15 together with the second sheet portion 122 of the edge bar 12, thus fixing the concrete plate 15 to the edge bar 12. In addition to the bolt 159, other fasteners may be used for fastening the flange 153 of the concrete plate 15 and the second sheet portion 122 of the edge bar 12 by means of the through hole 1530 of the flange 153 and the through hole 1220 of the second sheet portion 122 or via other methods, so that the concrete plate 15 is fixed to the edge bar 12.

The concrete plate 16 may also be fixed to the edge bar 12 in the same or similar manner as described above.

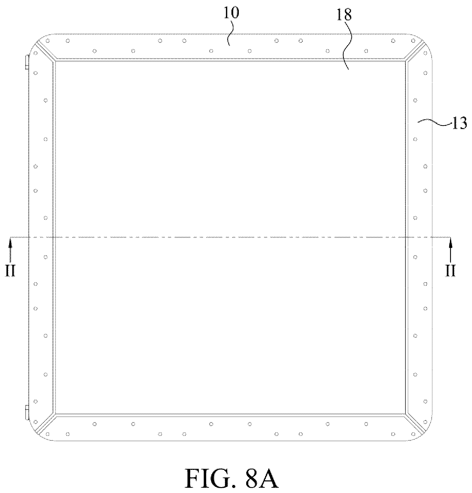

FIG. 8A is a schematic top view of a cabinet 1 for receiving an energy storage apparatus according to an embodiment of the present disclosure. As shown in FIG. 8A, the concrete plate 18 is arranged on the frame 10, which is substantially surrounded by the edge bar 13 of the frame 10.

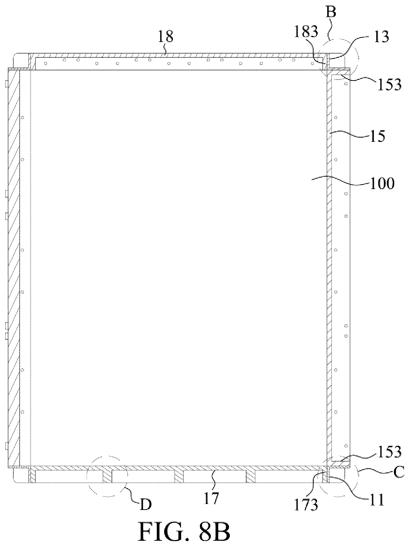

FIG. 8B is a schematic view of cross-section II-II of FIG. 8A. As shown in FIG. 8B, the upper and lower flanges 153 of the concrete plate 15 abut against the edge bars 11 and 13 of the frame 10. The flange 173 of the concrete plate 17 abuts against the edge bar 11 of the frame 10, and the flange 183 of the concrete plate 18 abuts against the edge bar 13 of the frame 10. The accommodating space 100 of the cabinet 1 is substantially surrounded by the concrete plates 15, 16, 17, and 18.

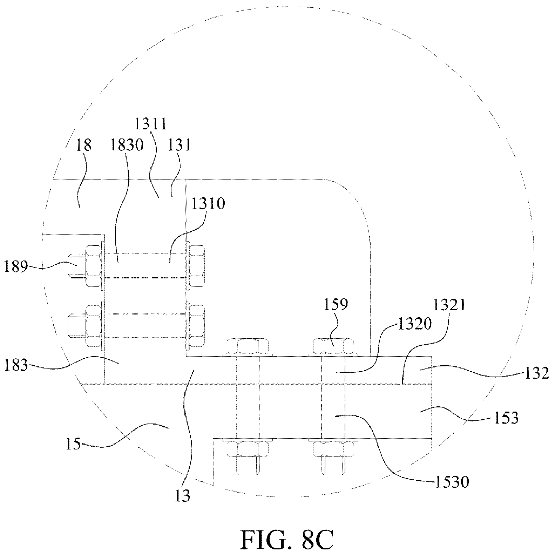

FIG. 8C is a schematic enlarged view of part B of FIG. 8B. Referring to FIG. 8C, the flange 183 of the concrete plate 18 and the flange 153 of the concrete plate 15 abut against the edge bar 13. As shown in FIG. 8C, the flange 183 of the concrete plate 18 abuts against a surface 1311 of the first sheet portion 131 of the edge bar 13, and the through hole 1830 of the flange 183 is substantially aligned with the through hole 1310 of the first sheet portion 131, while a bolt 189 passes through the through hole 1830 of the flange 183 and the through hole 1310 of the first sheet portion 131 to fasten the flange 183 of the concrete plate 18 together with the first sheet portion 131 of the edge bar 13, thus fixing the concrete plate 18 to the edge bar 13. In addition to the bolt 189, other fasteners may be used for fastening the flange 183 of the concrete plate 18 and the first sheet portion 131 of the edge bar 13 by mneas of the through hole 1830 of the flange 183 and the through hole 1310 of the first sheet portion 131 or via other methods, so that the concrete plate 18 is fixed to the edge bar 13.

Also, the flange 153 of the concrete plate 15 abuts against a surface 1321 of the second sheet portion 132 of the edge bar 13, and the through hole 1530 of the flange 153 is substantially aligned with the through hole 1320 of the second sheet portion 132, while a bolt 159 passes through the through hole 1530 of the flange 153 and the through hole 1320 of the second sheet portion 132 to fasten the flange 153 of the concrete plate 15 together with the second sheet portion 132 of the edge bar 13, thus fixing the concrete plate 15 to the edge bar 13. In addition to the bolt 159, other fasteners may be used for fastening the flange 153 of the concrete plate 15 and the second sheet portion 132 of the edge bar 13 by means of the through hole 1530 of the flange 153 and the through hole 1320 of the second sheet portion 132 or via other methods, so that the concrete plate 15 is fixed to the edge bar 13.

The concrete plates 14 and 16 may also be fixed to the edge bar 13 in the same or similar manner as described above.

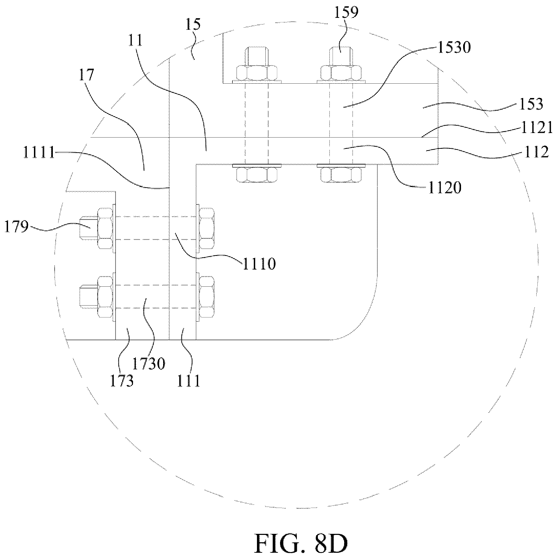

FIG. 8D is a schematic enlarged view of part C of FIG. 8B. Referring to FIG. 8D, the flange 173 of the concrete plate 17 and the flange 153 of the concrete plate 15 abut against the edge bar 11. As shown in FIG. 8D, the flange 173 of the concrete plate 17 abuts against a surface 1111 of the first sheet portion 111 of the edge bar 11, and the through hole 1730 of the flange 173 is substantially aligned with the through hole 1110 of the first sheet portion 111, while a bolt 179 passes through the through hole 1730 of the flange 173 and the through hole 1110 of the first sheet portion 111 to fasten the flange 173 of the concrete plate 17 together with the first sheet portion 171 of the edge bar 11, thus fixing the concrete plate 17 to the edge bar 11. In addition to the bolt 179, other fasteners may be used for fastening the flange 173 of the concrete plate 17 and the first sheet portion 111 of the edge bar 11 by means of the through hole 1730 of the flange 173 and the through hole 1110 of the first sheet portion 111 or via other methods, so that the concrete plate 17 is fixed to the edge bar 11.

Also, the flange 153 of the concrete plate 15 abuts against a surface 1121 of the second sheet portion 112 of the edge bar 11, and the through hole 1530 of the flange 153 is substantially aligned with the through hole 1120 of the second sheet portion 112, while a bolt 159 passes through the through hole 1530 of the flange 153 and the through hole 1120 of the second sheet portion 112 to fasten the flange 153 of the concrete plate 15 together with the second sheet portion 112 of the edge bar 11, thus fixing the concrete plate 15 to the edge bar 11. In addition to the bolt 159, other fasteners may be used for fastening the flange 153 of the concrete plate 15 and the second sheet portion 112 of the edge bar 11 by means of the through hole 1530 of the flange 153 and the through hole 1120 of the second sheet portion 112 or via other methods, so that the concrete plate 15 is fixed to the edge bar 11.

The concrete plates 14 and 16 may also be fixed to the edge bar 11 in the same or similar manner as described above.

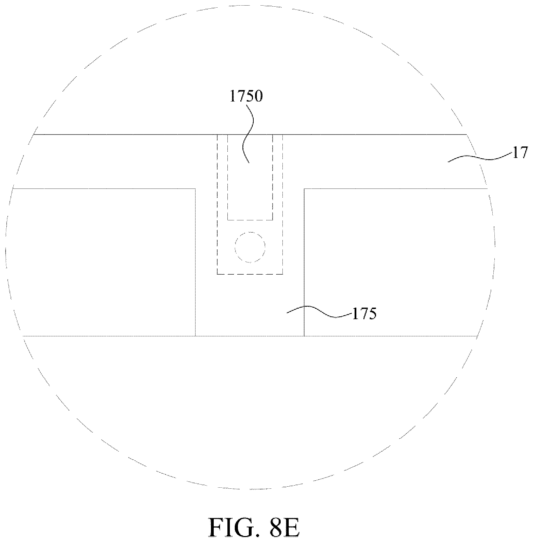

FIG. 8E is a schematic enlarged view of part D of FIG. 8B. Referring to FIG. 8E, the concrete plate 17 has the rib 175 extending downward. In some embodiments, the rib 175 has an embedded hole 1750. The embedded hole 1750 may receive a fastener. The fastener is arranged in the embedded hole 1750, extends out of the upper surface of the concrete plate 17, and is configured to engage a battery system placed in the accommodating space 100 of the cabinet 1 and on the upper surface of the concrete plate 17, so that the battery system is fixed in the accommodating space 100 without relative movement with the concrete plate 17.

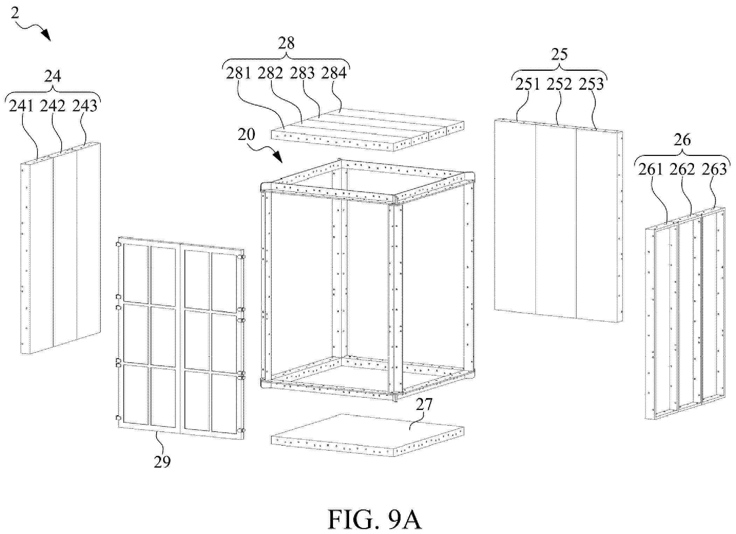

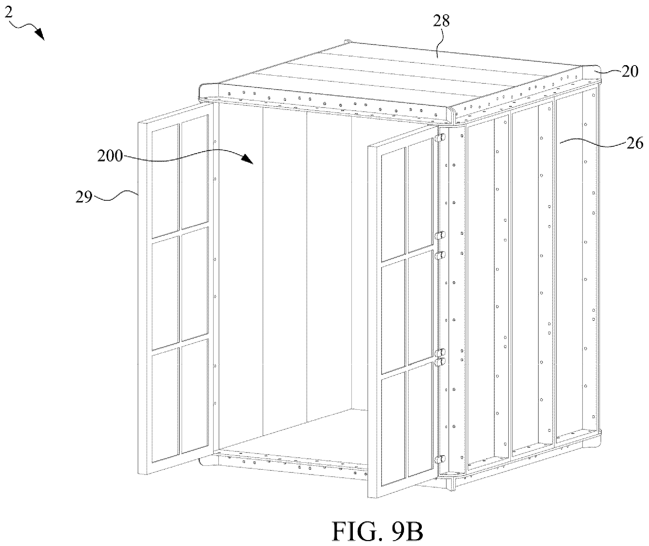

FIG. 9A is a schematic exploded view of a cabinet for receiving an energy storage apparatus according to an embodiment of the present disclosure. FIG. 9B is a schematic perspective view of a cabinet for receiving an energy storage apparatus according to an embodiment of the present disclosure. As shown in FIG. 9A and FIG. 9B, a cabinet 2 may include a frame 20, a plurality of concrete plates 24, 25, 26, 27, and 28 including concrete materials, and a door 29. In some embodiments of the present disclosure, the concrete plates 24, 25, 26, 27, and 28 include substantially sheet-shaped concrete structures. In some embodiments of the present disclosure, the cabinet 2 may be a storage cabinet which has a accommodating space 200 and is configured to store one or more energy storage apparatuses such as battery systems.

In some embodiments of the present disclosure, the frame 20 of the cabinet 2 is the same as or similar to the frame 10 of the cabinet 1. In some embodiments of the present disclosure, the concrete plate 27 of the cabinet 2 is the same as or similar to the concrete plate 17 of the cabinet 1. In some embodiments of the present disclosure, the door 29 of the cabinet 2 is the same as or similar to the door 19 of the cabinet 1. In some embodiments of the present disclosure, the concrete plates 24, 25, 26, 27, and 28 of the cabinet 2 include or are constituted by the same or similar material as the concrete plates 14, 15, 16, 17, and 18 of the cabinet 1.

Furthermore, in some embodiments of the present disclosure, the concrete plates 24, 25, 26, 27, and 28 and the door 29 are arranged on the frame 20 in the same or similar manner as or to the manner in which the concrete plates 14, 15, 16, 17, and 18 and the door 19 are arranged on the frame 10.

In some embodiments of the present disclosure, the cabinet 2 differs from the cabinet 1 in that each of the concrete plates 24, 25, and 26 further has three sub-concrete plates 241, 242, 243, 251, 252, 253, 261, 262, and 263, which abut against each other side by side. The concrete plate 28 has four sub-concrete plates 281, 282, 283, and 284, which abut against each other side by side.

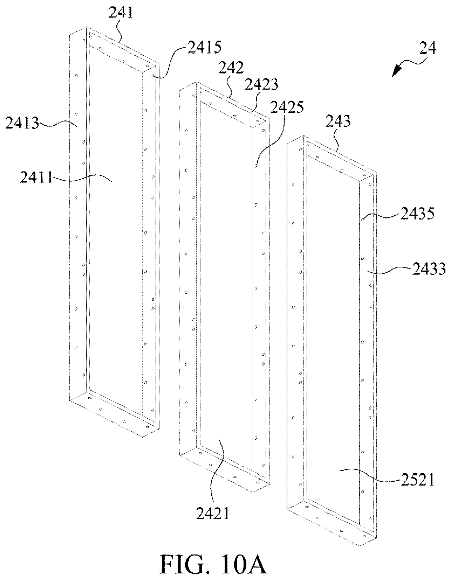

As shown in FIG. 10A, the concrete plate 24 may further include three sub-concrete plates 241, 242, and 243. Each of the concrete plates 241, 242, and 243 has plate portions 2411, 2421, and 2431 and flanges 2413, 2423, and 2433. The flanges 2413, 2423, and 2433 are formed on surfaces of the sub-concrete plates 241, 242, and 243 facing away from the accommodating space 200. That is, the flanges 2413, 2423, and 2433 are formed on outer surfaces of the sub-concrete plates 241, 242, and 243 and extend outward. Referring to FIG. 10A, the flanges 2413, 2423, and 2433 substantially extend at the periphery of the sub-concrete plates 241, 242, and 243 and surround the plate portions 2411, 2421, and 2431 of the concrete plates 241, 242, and 243, and the flanges 2413, 2423, and 2433 have through holes 2415, 2425, and 2435 for passage of bolts. When the sub-concrete plates 241, 242, and 243 abut against each other, the through hole 2415 of the sub-concrete plate 241 may be substantially aligned with the through hole 2425 of the sub-concrete plate 242, and the through hole 2425 of the sub-concrete plate 242 may be substantially aligned with the through hole 2435 of the sub-concrete plate 243.

In some embodiments of the present disclosure, the plate portions 2411, 2421, and 2431 and the flanges 2413, 2423, and 2433 of the sub-concrete plates 241, 242, and 243 are formed simultaneously when concrete slurry is poured into a mold to form the sub-concrete plates 241, 242, and 243. Therefore, the plate portions 2411, 2421, and 2431 and the flanges 2413, 2423, and 2433 of the concrete plates 241, 242, and 243 are integrally formed. In some embodiments of the present disclosure, the through holes 2415, 2425, and 2435 of the flanges 2413, 2423, and 2433 are formed when the concrete slurry is poured into the mold to form the sub-concrete plates 241, 242, and 243. In some embodiments of the present disclosure, the thickness of the flanges 2413, 2423, and 2433 of the concrete plates 241, 242, and 243 is greater than the thickness of the plate portions 241, 242, and 243.

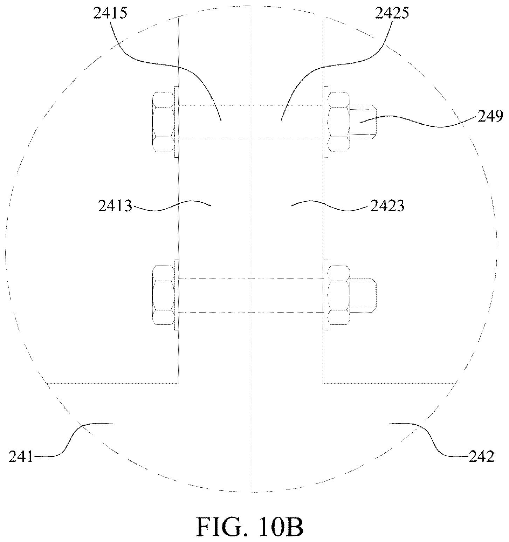

FIG. 10B is a schematic partially enlarged view revealing that sub-concrete plates 241 and 242 of a concrete plate 24 abut against each other. As shown in FIG. 10B, the flange 2413 of the sub-concrete plate 241 and the flange 2423 of the sub-concrete plate 242 may abut against each other, and the through hole 2415 of the sub-concrete plate 241 may be substantially aligned with the through hole 2425 of the sub-concrete plate 242. The bolt 249 passes through the through hole 2415 of the flange 2413 and the through hole 2425 of the flange 2423 to fasten the flange 2413 of the sub-concrete plate 241 and the flange 2423 of the sub-concrete plate 242 together, so that the sub-concrete plates 241 and 242 are fixed together. In addition to the bolt 249, other fasteners may be used for fastening the flange 2413 of the sub-concrete plate 241 and the flange 2423 of the sub-concrete plate 242 by the through hole 2415 of the flange 2413 and the through hole 2425 of the flange 2423 or in other manners, so that the sub-concrete plates 241 and 242 are fixed together.

In some embodiments of the present disclosure, the sub-concrete plate 242 and the sub-concrete plate 243 may be fixed together in the same or similar manner as described above.

In some embodiments of the present disclosure, the concrete plates 25 and 26 are of the same or similar structure as or to the concrete plate 24.

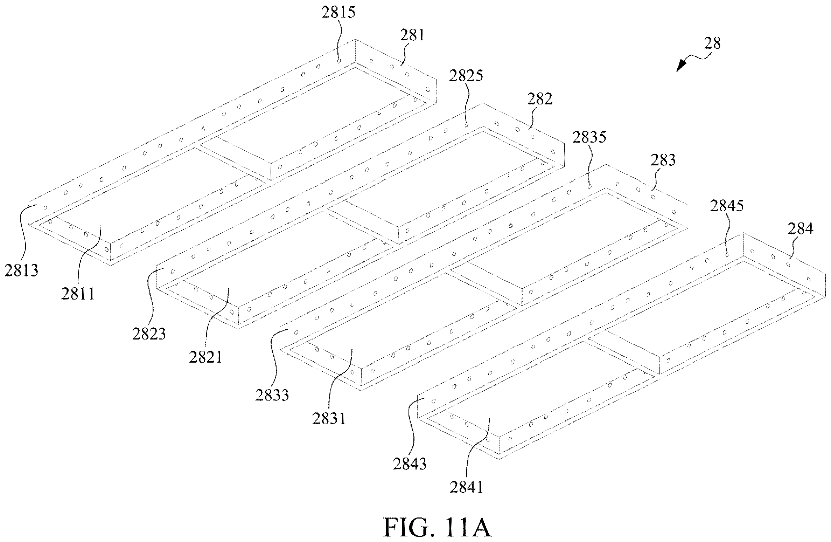

As shown in FIG. 11A, the concrete plate 28 may further include four sub-concrete plates 281, 282, 283, and 284. Each of the sub-concrete plates 281, 282, 283, and 284 has plate portions 2811, 2821, 2831, and 2841 and flanges 2813, 2823, 2833, and 2843. The flanges 2813, 2823, 2833, and 2843 are formed on surfaces of the sub-concrete plates 281, 282, 283, and 284 facing the accommodating space 200. That is, the flanges 2813, 2823, 2833, and 2843 are formed on lower (inner) surfaces of the sub-concrete plates 281, 282, 283, and 284 and extend downward (inward). Referring to FIG. 11A, the flanges 2813, 2823, 2833, and 2843 substantially extend at the periphery of the sub-concrete plates 281, 282, 283, and 284 and surround the plate portions 2811, 2821, 2831, and 2841 of the concrete plates 281, 282, 283, and 284, and the flanges 2813, 2823, 2833, and 2843 have through holes 2815, 2825, 2835, and 2845 for passage of bolts. When the sub-concrete plates 281, 282, 283, and 284 abut against each other, the through hole 2815 of the sub-concrete plate 281 may be substantially aligned with the through hole 2825 of the sub-concrete plate 282, the through hole 2825 of the sub-concrete plate 282 may be substantially aligned with the through hole 2835 of the sub-concrete plate 283, and the through hole 2835 of the sub-concrete plate 283 may be substantially aligned with the through hole 2845 of the sub-concrete plate 284.

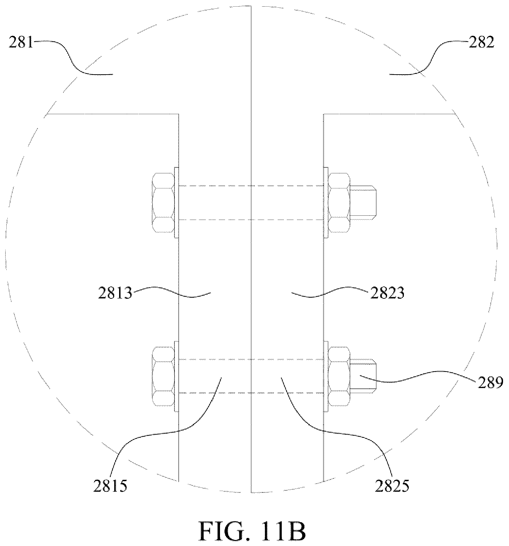

FIG. 11B is a schematic partially enlarged view revealing that sub-concrete plates 281 and 282 of a concrete plate 28 abut against each other. As shown in FIG. 11B, the flange 2813 of the sub-concrete plate 281 and the flange 2823 of the sub-concrete plate 282 may abut against each other, and the through hole 2815 of the sub-concrete plate 281 may be substantially aligned with the through hole 2825 of the sub-concrete plate 282. The bolt 289 passes through the through hole 2815 of the flange 2813 and the through hole 2825 of the flange 2823 to fasten the flange 2813 of the sub-concrete plate 281 and the flange 2823 of the sub-concrete plate 282 together, so that the sub-concrete plates 281 and 282 are fixed together. In addition to the bolt 289, other fasteners may be used for fastening the flange 2813 of the sub-concrete plate 281 and the flange 2823 of the sub-concrete plate 282 by the through hole 2815 of the flange 2813 and the through hole 2825 of the flange 2823 or in other manners, so that the sub-concrete plates 281 and 282 are fixed together.

In some embodiments of the present disclosure, the sub-concrete plate 282 and the sub-concrete plate 283 may be fixed together in the same or similar manner as described above, and the sub-concrete plate 283 and the sub-concrete plate 284 may be fixed together in the same or similar manner as described above.

The following presents experimental results of exemplary embodiments for further presenting characteristics and advantages of concrete materials for the cabinets 1 and 2 according to some embodiments of the present disclosure. Table 1 presents experimental conditions of Embodiments E1, E2, E3, E4, and C1. Table 2 presents test results of Embodiments E1, E2, E3, and E4. "Cement I" and "Cement II" are two selected from the group consisting of Portland Type I cement, Portland Type II cement, Portland Type III cement, Portland Type IV cement, and Portland Type V cement. "Granule 1" is silica fume. "Granule 2" is quartz powder or slag powder. "Granule 3" is silica sand. "Additive 1" is water reducer. "Additive 2" is defoamer. "Additive 3" is sweller.

**Table 1**

| | Cement I | Cement II | Synthetic fiber | | | Granule 1 | Granule 2 | Granule 3 | Oxide | Additive 1 | Additive 2 | Additive 3 |
|---|---|---|---|---|---|---|---|---|---|---|---|---|
| | kg/m³ | kg/m³ | Length (mm) | Diameter (mm) | kg/m³ | kg/m³ | kg/m³ | kg/m³ | kg/m³ | kg/m³ | kg/m³ | kg/m³ |
| E1 | 800-900 | 0 | 4-20 | 0.2 | 30-60 | 120-180 | 50-300 | 900-1000 | 0-70 | 10-20 | 0-10 | 0-25 |
| E2 | 400-500 | 400-500 | | | | | | | | | | |
| E3 | 400-500 | 400-500 | | | | | | | | | | |
| E4 | 400-500 | 400-500 | | | | | | | | | | |
| C1 | 200-400 | - | - | - | - | - | - | 600-800 | - | 2-5 | - | - |
| C2 | 350-500 | - | - | - | - | - | - | 800-1000 | - | 4-8 | - | - |

The cement, the granules, the oxides, and the additives of the embodiment shown in Table 1 are mixed with water in proportion and stirred for several minutes. When slurry is uniform and pasty, synthetic fibers are added and then stirred uniformly. Then, the slurry is poured into the mold. Then, the slurry is cured for three days at the curing temperature of 22°C to 24°C and the humidity of 50 to 95%, and the mold is removed. After the mold is removed, the mechanical properties of the finished product must be tested 28 days later. The test results are shown in Table 2.

**Table 2**

| | Unit weight (kg/m³) | Compressive strength (MPa) | Ultimate bending strength (MPa) | First crack bending strength (MPa) | Elastic coefficient (GPa) | Tensile strength (MPa) | Shrinkage factor (mm/m) | Diffusion coefficient of chloride ion (m²/sec) | Thermal conductivity (W/m·K) |
|---|---|---|---|---|---|---|---|---|---|
| E1 | 2300 | 120 | ≧15 | ≧10 | ≧35 | >5 | < 300 | ≦5x10⁻¹³ | 1.60-1.80 |
| E2 | 2400 | 150 | ≧20 | | | | | | |
| E3 | 2500 | 180 | ≧25 | | | | | | |
| E4 | 2500 | 160 | ≧22 | | | | | | |
| C1 | 2300 | 28 | | | | | | | 1.90-2.10 |
| C2 | 2400 | 40 | | | | | | | |

From the results presented in Table 2, it is apparent that the concrete materials according to some embodiments of the present disclosure have good mechanical properties compared to the ordinary concrete. The concrete materials of some embodiments of the present disclosure have a unit structural weight of about 2300 kg/m³ to about 2700 kg/m³, a compressive strength greater than about 120 MPa, and an ultimate bending strength greater than about 15 MPa. Also, the concrete materials of some embodiments of the present disclosure have a first crack bending strength greater than about 15 MPa, an elastic coefficient greater than about 35 GPa, and a tensile strength greater than about 5 MPa. Furthermore, the concrete materials of some embodiments of the present disclosure have a shrinkage factor less than about 300 mm/m, a diffusion coefficient of chloride ion less than about 5×10⁻¹³ m²/sec, and a thermal conductivity of about 1.6 W/m·K to about 1.8 W/m·K.

In addition, Table 3 presents a comparison of the weight and compressive strength of the concrete materials according to some embodiments of the present disclosure with a variety of other materials. Embodiment E3 of Tables 1-2 is adopted for the concrete materials, and Embodiment C1 of Tables 1-2 is adopted for the ordinary concrete.

**Table 3**

| | Volume | Weight | Compressive strength (MPa) | Height (cm) | Width (cm) |
|---|---|---|---|---|---|
| Concrete material | 40x40x2 cm³ | 8.4 kg | | | |
| Ordinary concrete | 40x40x2 cm³ | 9.3 kg | | | |
| Concrete body | | | 100 | 37 | 32 |
| Prestressed concrete | | | 100 | 70 | 35 |
| Reinforced concrete | | | 100 | 70 | 60 |

From the results presented in Table 3, it is apparent that the concrete materials according to some embodiments of the present disclosure are lighter than the ordinary concrete, thereby facilitating the fabrication of lighter cabinets. Furthermore, the concrete materials according to some embodiments of the present disclosure have a smaller thickness at the same compressive strength than the prestressed concrete and the reinforced concrete, thereby facilitating the fabrication of thinner concrete plates.

The cabinets 1 and 2 of the present disclosure may be used for providing solid accommodating spaces 100 and 200 for receiving or storing the energy storage apparatus. In particular, the frames 10 and 20 of the cabinets 1 and 2 may further strengthen the overall strength of the cabinets 1 and 2.

The features of several embodiments have been summarized above so that the patterns of the present disclosure may be better understood by those skilled in the art. Those skilled in the art will appreciate that the present disclosure may readily be used as a basis for designing or modifying other procedures and structures to achieve the same purposes and/or achieve the same advantages of the embodiments introduced herein. Those skilled in the art should also realize that such equivalent constructions should not depart from the spirit and scope of the present disclosure and may make various changes, substitutions, and alterations herein.

## Claims

1. A cabinet (1,2) for receiving a battery system, comprising:
a plurality of first edge bars (11) substantially extending in a direction;
a plurality of second edge bars (12) substantially extending vertically to the first edge bars;
a plurality of third edge bars (13) substantially extending vertically to the first edge bars, wherein the first edge bars, the second edge bars, and the third edge bars co-form a substantially cube-shaped frame, the frame defining a accommodating space;
a plurality of concrete side plates (14,15,16,17,18), a flange (143,153,163,173,183) being formed on a surface of each concrete side plate facing away from the accommodating space, wherein the flange of each of the concrete side plates abuts against the first edge bar, the second edge bar, and the third edge bar so that the concrete side plates being surrounded by the first edge bar, the second edge bar, and the third edge bar;
a concrete bottom plate, wherein the concrete bottom plate is surrounded by the second edge bars;
a concrete top plate, wherein the concrete top plate is surrounded by the third edge bar; and
a space surrounded by the concrete side plates, the concrete bottom plate, and the concrete top plate and configured to receive the battery system.

2. The cabinet according to claim 1, wherein the concrete side plate, the concrete bottom plate, and/or the concrete top plate comprise(s) an ultra-high performance concrete (UHPC).

3. The cabinet according to claim 1 or 2, wherein the concrete side plate, the concrete bottom plate, and/or the concrete top plate comprise(s) silica fume in a content of 120 kg/m³ to 250 kg/m³ and quartz powder or slag powder in a content of 30 kg/m³ to 300 kg/m³.

4. The cabinet according to any of the claims 1 to 3, wherein the unit structural weight of the concrete side plate, the concrete bottom plate, and/or the concrete top plate is about 2300 kg/m³ to about 2700 kg/m³, and the thermal conductivity of the concrete side plate, the concrete bottom plate, and/or the concrete top plate is about 1.6 W/m·K to about 1.8 W/m·K.

5. The cabinet according to any of the claims 1 to 4, wherein the concrete side plate, the concrete bottom plate, and/or the concrete top plate comprise(s) synthetic fibers in a content of 30 kg/m³ to 60 kg/m³, and the thickness is less than or equal to about 2.5 cm.

6. The cabinet according to any of the claims 1 to 5, wherein the concrete side plate, the concrete bottom plate, and/or the concrete top plate comprise(s) silica fume, quartz powder, slag powder, synthetic fibers, or a random combination thereof.

7. The cabinet according to claim 1, wherein the first edge bar, the second edge bar, and/or the third edge bar comprise(s) a substantially L-shaped cross-section structure.

8. The cabinet according to claim 1, wherein the concrete side plate has at least two sub-plates abutting against each other.

9. The cabinet according to claim 8, wherein a surface of each of the sub-plates facing away from the accommodating space has a flange, the flanges of the sub-plates abutting against each other, and a first fastener being arranged on the flanges of the sub-plates and configured to connect the sub-plates.

10. The cabinet according to claim 1, wherein the concrete bottom plate has a surface facing away from the accommodating space, and the surface has a plurality of ribs extending in a mutually interlaced manner.

11. The cabinet according to claim 10, wherein the rib of the concrete bottom plate has a through hole, the through hole being configured to receive a second fastener for fixing the battery system into the accommodating space.
